# EUROPÄISCHE PATENTSCHRIFT

(11) **EP 1 488 103 B1**
(45) Veröffentlichungstag und Bekanntmachung des Hinweises auf die Patenterteilung: **14.05.2008**
(21) Anmeldenummer: 03744790.1
(22) Anmeldetag: 08.03.2003
(51) Int. Cl.: F03G 7/06, G02B 26/10

(54) **AKTOR FÜR EINEN OPTISCH-MECHANISCHEN SCANNER SOWIE VERFAHREN UNTER VERWENDUNG DES AKTORS**
ACTUATOR FOR AN OPTICAL-MECHANICAL SCANNER AND A METHOD USING SAID ACTUATOR
ACTIONNEUR POUR UN SCANNER OPTO-MECANIQUE ET PROCEDE FAISANT APPEL AUDIT ACTIONNEUR

(30) Priorität: 27.03.2002 DE 10213671
(43) Veröffentlichungstag der Anmeldung: 22.12.2004
(73) Patentinhaber: Forschungszentrum Karlsruhe GmbH, 76133 Karlsruhe (DE)
(72) Erfinder: KOHL, Manfred, 76689 Karlsdorf (DE); YAMAUCHI, Koyoshi, Taihaku-ku, Sendai 982 (JP); OHTSUKA, Makoto, Aoba-ku, Sendai 980-8577 (JP); TAKAGI, Toshiyuki, Aoba-ku, Sendai 980-8577 (JP)
(74) Vertreter: Rückert, Friedrich
(86) Internationale Anmeldenummer: PCT/EP2003/002382
(87) Internationale Veröffentlichungsnummer: WO 2003/081039

(56) Entgegenhaltungen:
- WO-A-01/16484
- DE-C- 19 721 349
- US-A- 5 982 521
- US-A- 6 057 947
- PATENT ABSTRACTS OF JAPAN vol. 1997, no. 02, 28. Februar 1997 (1997-02-28) & JP 08 262364 A (OLYMPUS OPTICAL CO LTD), 11. Oktober 1996 (1996-10-11)
- PATENT ABSTRACTS OF JAPAN vol. 1996, no. 09, 30. September 1996 (1996-09-30) & JP 08 122679 A (OLYMPUS OPTICAL CO LTD), 17. Mai 1996 (1996-05-17)

## Beschreibung

Die Erfindung betrifft einen Aktor für einen optisch-mechanischen Scanner gemäß dem Oberbegriff des ersten Patentanspruchs sowie ein Verfahren unter Verwendung des Aktors gemäß Anspruch 8.

Optisch-mechanische Scanner werden z.B. in Lesegeräten zum Identifizieren von Barcodes (Barcode-Scanner) genutzt. Die Funktion derartiger Scanner basiert im Wesentlichen auf dem phototechnischen Abtasten einer zu identifizierenden Fläche mit einem periodisch abgelenkten Lichtstrahl, welcher zur Erzielung der je nach Anwendung mehr oder weniger erforderlich hohen Auflösung auf die Fläche fokussiert ist. Der zeitliche Verlauf des reflektierenden Lichts wird dann über einen photoelektrischen Empfänger empfangen und in elektrische Signale überführt. Aus dem zeitlichen Verlauf dieser Signale erfolgt die Rekonstruktion der zu identifizierenden Fläche.

Optisch-mechanische Scanner umfassen somit eine Einheit für die Stahlablenkung, welche auf unterschiedliche Funktionsprinzipien aufbauen. Entscheidend für eine Auslegung ist die erforderliche Anwendung. Ist ein Scanner für die Eingabe von Textvorlagen oder gar Farbabbildungen mit hoher Auflösung ausgelegt, erfolgt eine Stahlablenkung meist über relativ langsame mechanische Verfahrvorrichtungen über eine große Fläche. Dagegen müssen Scanner, welche beispielsweise in Kassensystemen für die Erfassung von Barcodes eingesetzt werden, in der Lage sein, die kodierte Information schnell, d.h. möglichst mit einem einzigen jedoch schnellen Scanvorgang mit relativ geringer, jedoch ausreichender lateraler Auflösung zu erfassen. Eine Erfassung einer ganzen Fläche über mehrere versetzte Scanvorgänge ist dabei nicht erforderlich. Bei allen Vorrichtungen zur Strahlablenkung muss jedoch der Lichtstrahl gleichförmig und mit einer stetigen Bewegung über das zu erfassende Objekt bewegt werden.

In [1] wird eine Vorrichtung zur Strahlablenkung beschrieben, welche technisch und wirtschaftlich als beste Lösung gilt und in nahezu allen für die phototechnische Erfassung eines Barcodes geeigneten optisch-mechanischen Scannern eingesetzt ist. Sie besteht aus einem rotierenden Polygonspiegel mit mehreren planen Spiegelflächen, welche mit der Umlaufrichtung sequenziell von einer Laserdiode als Lichtquelle angestrahlt werden. Der Laserstrahl wird also mit doppelter Umlaufwinkelgeschwindigkeit über den einzulesenden Barcode reflektiert, wobei sich dieser Vorgang mit Auftreffen des Laserstrahls auf die jeweils nächste Spiegelfläche laufend wiederholt. Als Scanfrequenz wird in [1] ein Bereich von 200 bis 800 Hz, als nutzbarer Scanwinkel 58° angegeben.

Ein weiteres technisches Ausführungsbeispiel hierzu offenbart [2] .

Bei Hand-Scannern für die Barcodeerfassung oder auch bei anderen, insbesondere transportablen Lesegeräten allgemein strebt man jedoch eine apparative Miniaturisierung der Strahlablenkung an. Vorrichtungen zur Stahlablenkung mit einem rotierenden Polygonspiegel erscheinen allerdings aufgrund des erforderlichen Antriebsaufwandes hierfür als nicht sehr praktikabel. Neue Konzepte unter Umgehung dieser Einschränkung basieren auf Vorrichtungen mit Aktoren unter Ausnutzung elektromagnetischer, magnetostriktiver oder elektrostatischer Effekte für die Strahlablenkung.

In diesem Zusammenhang wird in [3] eine Vorrichtung offenbart, bei der eine Strahlablenkung kontinuierlich über einen in Resonanz schwingenden magnetostriktiven Aktor als Träger für eine Spiegelfläche erfolgt. Das magnetische Feld, welches über zwei Helmholtzspulen erzeugt wird, wirkt dabei auf einen Cantilever-Bimorphresonator. Als Scanfrequenz wird ein Bereich von 10 bis 50 kHz, als nutzbaren Scanwinkel 24° angegeben.

Aus [4] , [5] und [7] sind alternative Vorrichtungen für eine Strahlablenkung mit Mikroaktoren unter Ausnutzung elektrostatischer [4] oder elektromagnetischer [5] Kräfte oder Formgedächtnislegierungen [7] beschrieben. Auch diese Aktoren verhalten sich wie Feder-Masse-Systeme, deren Amplitudengang durch eine starke Frequenzabhängigkeit, durch verschiedene Schwingungsmodi und Nebenresonanzen gekennzeichnet sind.

Der Erfindung liegt die Aufgabe zugrunde, einen Aktor für die Strahlablenkung in einem optisch-mechanischen Scanner sowie ein Verfahren unter Verwendung des Aktors vorzuschlagen, welcher bzw. welches insbesondere die Nachteile, welche durch Feder-Masse-Systeme hervorgerufen werden, weitgehend vermeidet.

Die Aufgabe wird durch die im Kennzeichen des ersten und achten Patentanspruchs angegebenen Merkmale gelöst. In den Unteransprüchen sind bevorzugte Ausgestaltungen des Verfahrens angegeben.

Erfindungsgemäß wird ein Aktor mit einem Biegeelement als Stellglied vorgeschlagen, welcher aus einer Formgedächtnislegierung mit magnetischen Eigenschaften, vorzugsweise einer NiMnGa-Legierung, hergestellt ist. Dabei ist der Biegeelement an einer Seite fixiert, während an der freien anderen Seite ein optischer Spiegel zur Umlenkung eines Lichtstrahls befestigt ist und mit dem Biegeelement hin- und herschwenkbar ist. Bei Überschreitung der Curie-Temperatur der Formgedächtnislegierung wandeln sich die magnetischen Eigenschaften von einem ferromagnetischen in eine paramagnetischen Zustand.

Wählt man die Formgedächtnislegierung des Biegeelements in seiner Legierungszusammensetzung so, dass die Curie-Temperatur, d. h. der Übergang von einer Modifikation mit ferro- zu einer mit paramagnetischen Eigenschaften, nur knapp oberhalb des vorgesehenen Einsatztemperaturbereichs liegt, kann durch moderate Temperaturschwankungen um die Curie-Temperatur ein Wechsel der magnetischen Eigenschaften hervorgerufen werden. Ein aus diesem Material hergestelltes Biegeelement ist auf diese Weise in einem permanenten Magnetfeld anregbar. Die Temperaturschwankungen könnten vorzugsweise durch direkten Stromdurchgang durch die Formgedächtnislegierung diskontinuierlich oder zyklisch erfolgen.

Formgedächtnislegierungen weisen zudem eine Umwandlungstemperatur auf, bei der sich bei einem Überschreiten dieser eine martensitische Modifikation in eine austenitische Modifikation umwandelt und in dieser Modifikationen eine eingeprägte Gedächtnisgestalt annehmen (Einweg-Effekt). Im Gegensatz zur der austenitischen Modifikation tritt beim Einweg-Effekt in der martensitischen Modifikation somit keine eingeprägte Gedächtnisgestalt auf. Der Einweg-Effekt lässt sich im Bereich der Erfindung allein dadurch nutzen, dass durch zyklisches Durchfahren der Umwandlungstemperatur das Biegeelement als Stellglied zwischen zwei Positionen, welche durch die eingeprägte Gedächtnisgestalt und die Gestalt des Stellglieds in der martensitischen Modifikation gegeben sind, hin- und hergeschaltet wird. Mit Aktoren für eine Strahlablenkung in einem optisch-mechanischen Scanner, würden grundsätzlich allein dadurch schon in vorteilhafter Weise größere Scanwinkel realisierbar sein.

Eine weitere Möglichkeit besteht in der Nutzung des sog. Zweiweg-Effekts, bei dem auch in der martensitischen Modifikation eine Gedächtnisgestalt vorliegt. Er stellt somit ein Sonderfall des Einweg-Effekts dar.

Anstelle eines Biegelements lässt sich auch ein Torsionselement als Stellglied einsetzen, welches bei Über- oder Unterschreiten der Umwandlungstemperatur eine Torsionsbewegung durchführt.

Eine besonders vorteilhafte Ausführungsform entsteht, wenn der Biegebalken als Stellglied aus einer Formgedächtnislegierung hergestellt ist, dessen Curie-Temperatur und Umwandlungstemperatur sich in einem sehr kleinen Temperaturfenster, welches zudem oberhalb der Einsatztemperatur angeordnet ist, befinden. Hierdurch lassen sich beide zuvor genannte Effekte parallel ausnutzen.

Durch Nutzung dieser beiden Effekte in einem Biegeelement, nämlich des Formgedächtniseffekts zur Verstellung des Biegeelements in eine Richtung und des magnetischen Effekts in die andere zurückgerichtete Richtung wird eine besonders vorteilhafte bidirektionale aktive Verstellung (Antagonismus) erreicht. Gleichzeitig nimmt die Rückstellkraft des jeweiligen Antagonisten bei Verstellung ab (negative Rückstellkraft - reverse biasing). Bei Nutzung des Formgedächtniseffekts (eingeprägte Gedächtnisgestalt oberhalb der Umwandlungstemperatur) in Vorwärtsrichtung wird die magnetische Rückstellkraft durch Einstellung der paramagnetischen Modifikation im Biegeelement oberhalb der Curie-Temperatur weitgehend eliminiert; der Biegeaktor nimmt eine vorbestimmte Krümmung ein. Unterhalb der Umwandlungstemperatur verliert die Formgedächtnislegierung ihre vorbestimmte Form, weist aber bei unterschrittener Curie-Temperatur ferromagnetische Eigenschaften auf. Der Formgedächtniseffekt wird also aufgehoben, und der Biegeaktor wird durch das äußere Magnetfeld in die Gegenrichtung ausgelenkt. Dieser Mechanismus führt in besonders vorteilhafter Weise zu sehr hohen Stellkräften in beiden Richtungen und dadurch zu großen Ausschlägen des Biegeelements und damit zu großen Scanwinkeln.

Die Dynamik der Stellbewegung wird allein durch die Wärmeübergangszeiten und die Breite des Temperaturfensters, in denen sich Curie-Temperatur und Umwandlungstemperatur befinden, bestimmt. Dabei liegt es nahe, dass das Biegeelement zur Sicherstellung kurzer Wärmeübergangszeiten eine hohe spezifische Oberfläche aufzuweisen hat. Strömungstechnische Zusammenhänge bewirken zudem, dass die Wärmeübergangszeit grundsätzlich auch mit der Bauteilgröße abnimmt.

Als realisierbares Temperaturfenster für eine ausreichende Dynamik hat sich ein Wert von ca. 30°C bewährt. Als Formgedächtnislegierungen, welches diesem Kriterium entsprechen, eignen sich insbesondere NiMnGa-Legierungen, welche aus 50 - 54 At.-% Ni, 23 - 25 At.-% Mn und 21 - 25 At.-% Ga bestehen. Tabelle 1 gibt die gemessenen Umwandlungstemperaturen und Curie-Temperaturen Tc für zwei mit einem PVD-Sputterverfahren hergestellte Bleche an, wobei A den Bereich der Umwandlung von martensitischer in austenitischer Modifikation während einer Aufheizung und M den Bereich der Umwandlung von austenitischer in martensitischer Modifikation während einer Abkühlung umfasst. Bei beiden dargestellten Formgedächtnislegierungen liegt die Curie-Temperatur Tc in besonders vorteilhafter Weise zwischen den Umwandlungstemperaturen A und M, welche somit das Temperaturfenster quantifizieren.

**Tabelle 1:**

| Umwandlungstemperaturen M und A sowie Curie-Temperaturen Tc für mit einem PVD-Sputterverfahren hergestellte Ni_{54,0}Mn_{24,1}Ga_{21,9}- und Ni_{53,6}Mn_{23,4}Ga_{23,0}-Bleche | | | | |
|---|---|---|---|---|
| Probe | Sputterleistung [W] | A [K] | M [K] | Tc [K] |
| Ni_{54,0}Mn₂₄, Ga_{21,9} | 50 | 387 - 397 | 365 - 373 | 376 |
| Ni_{53,6}Mn_{23,4}Ga_{23,0} | 400 | 340 - 350 | 335 - 338 | 345 |

Ein entscheidender Einfluss auf die Dynamik der Stellbewegung ergibt sich aus dem Hystereseverhalten der eingesetzten Formgedächtnislegierung beim Überspringen der Umwantllungstemperatur (Hysteresebreite entspricht der Differenz zwischen A und M) und Curie-Temperatur. Grundsätzlich begünstigt eine schmale Hysterese die Dynamik.

Die Frequenz, bis zu der ein Betrieb mit Frequenz unabhängiger Amplitude möglich ist, wird die obere Grenzfrequenz des Biegeelements genannt. Zur Vermeidung von Resonanzeffekten muss diese jedoch zwingend unterhalb der Resonanzfrequenz des Biegeelements liegen. Oberhalb dieser Grenzfrequenz nimmt die maximale Amplitude aufgrund des zunehmenden Einflusses der thermischen Trägheit mit der Frequenz ab. Biegeelemente mit geringen Abmessungen weisen naturgemäß höhere Resonanzfrequenzen und höhere Grenzfrequenzen auf.

Es ist somit ersichtlich, dass sich die Erfindung dadurch besonders als Mikroaktor eignet. Hierdurch kann der Aktor in vorteilhafter Weise mit mikroelektronische Aufbauten, beispielsweise als Komponente für portable Geräte integriert werden. Ein weiterer Vorteil erschließt sich durch die parallelen Fertigungsmöglichkeiten in der Mikrosystemtechnik, welche den Herstellungsaufwand und damit die Kosten des Aktors vor allem bei großen Stückzahlen signifikant reduziert.

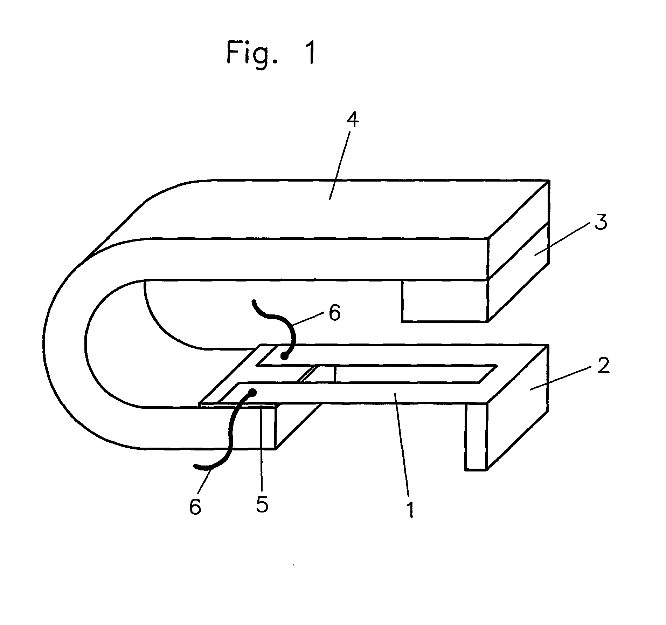

Die Erfindung wird im folgenden anhand der Figuren von zwei Ausführungsbeispielen näher erläutert. Es zeigen
Fig. 1 eine erste Ausführungsform des Aktors,
Fig. 2 eine zweite Ausführungsform des Aktors.

Der Aktor für einen optisch-mechanischen Scanner gem. des ersten Ausführungsbeispiels besteht im wesentlichen aus einem Biegeelement 1, einem mikrooptischen Spiegel 2, einem Magneten 3 hoher remanenter Feldstärke sowie einem Träger 4. Der Träger 4 dieses Ausführungsbeispiels besteht aus einem u-förmig gebogenen Blechstreifen mit unterschiedlich langen und parallel zueinander ausgerichteten geraden Flanken. Der Biegeelement 1 liegt als ein in U-Form ausgeschnittenes Blech aus der zuvor beschriebenen Formgedächtnislegierung vor, welches auf geeignete Weise mit den beiden proximalen Enden flach auf der Innenseite der kürzeren Flanke des Trägers befestigt ist. Dabei ist der Biegeelement vorzugsweise parallel zu der längeren Flanke des Trägers ausgerichtet und endet mit seinem distalen Ende mit dieser auf etwa gleicher Höhe. Die beiden proximalen Enden des Biegeelements weisen jeweils einen elektrischen Anschluss 6 auf und sind mit einer Isolationsschicht 5 zum Träger elektrisch isoliert. Am distalen Ende des Biegeelements 1 ist der Spiegel 2 fixiert und ist mit diesem schwenkbar. Spiegelfächen des Spiegels 2 können je nach Konzeption des optisch-mechanischen Scanners orthogonal oder parallel zu dem Biegeelement 1 ausgerichtet sein. Der Magnet 3 ist als Permanentmagnet auf der Innenseite der längeren Flanke des Trägers 4 befestigt.

Über die beiden Anschlüsse 6 wird ein elektrischer Strom auf die proximalen Enden des Biegeelements 1 übertragen, womit eine Aufheizung des Biegeelements über direktem Stromdurchgang auf eine Temperatur über der Curie-Temperatur, aber auch über die Umwandlungstemperatur erfolgt. In Folge dessen verliert das Biegeelement seine ferromagnetischen Eigenschaften und nimmt eine vorbestimmte Krümmung, d. h. die eingeprägte Gedächtnisgestalt, ein, welche entsprechend der zuvor beschriebenen Auslegung als Antagonismus von dem Magneten 3 weg gerichtet ist. Wird der elektrische Strom zurückgenommen, erfolgt in der Formgedächtnislegierung des Biegeelements durch Abkühlung eine Unterschreitung der Curie-Temperatur und der Umwandlungstemperatur, wodurch die vorbestimmte Krümmung aufgehoben wird, gleichzeitig das Biegeelement ferromagnetische Eigenschaften erhält und zum Magneten 3 hingezogen wird.

Eine Verstärkung erfährt der Antagonismus, wenn der Träger 4 aus einem weichmagnetischen Materials gefertigt ist. Hierdurch entsteht ein magnetischer Kreis, welcher vom Magneten 3 über den Träger 4 zum Biegeelement 1 verläuft.

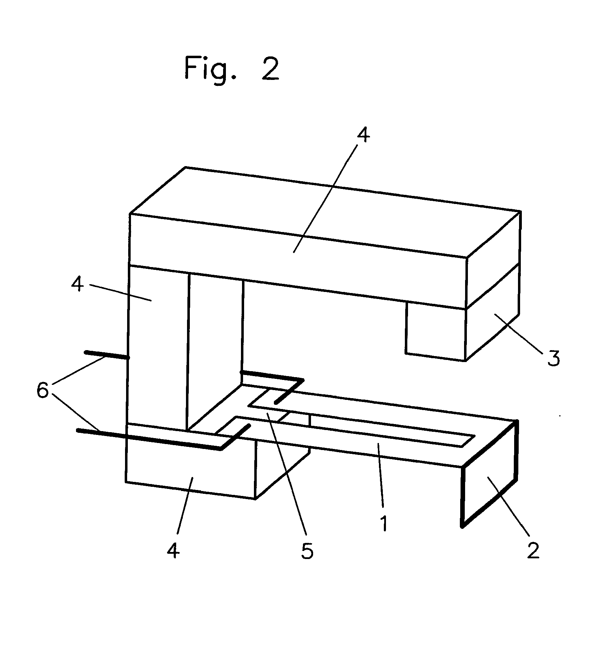

Wie in Fig. 2 anhand des zweiten Ausführungsbeispiels dargestellt, kann der Träger 4 anstelle aus einem in U-Form gebogenen Blechstreifens auch aus mehreren Komponenten zusammengesetzt sein. Diese Bauform bietet sich insbesondere für Aktoren an, welche mittels mikrotechnischer Fertigungsverfahren hergestellt werden.

Das beschriebene zweite Ausführungsbeispiel weist eine Höhe von 5,3 mm, eine Breite von 3 mm sowie eine Länge von 9 mm auf. Das Biegeelement mit seiner lateralen Erstreckung von 6,0 x 2,5 mm besteht aus einem 20 µm dickem NiMnGa-Blech, welches nach einer thermomechanischen Erzeugung der vorbestimmten Krümmung oberhalb der Curie-Temperatur über eine Kaptonfolie als Isolierung 5 auf dem Träger fixiert wurde. Das NiMnGa-Blech kann mit einem Magnetron-Sputterverfahren, d. h. über ein PVD-Verfahren hergestellt werden. Für den Transfer des Biegeelements 1 auf den Träger 4 bietet sich vorzugsweise ein Abhebeverfahren an (beschrieben z.B. in [6]), welches eine Übertragung mikrostrukturierter Funktionsschichten mit hoher Präzision erlaubt. Die elektrischen Anschlüsse werden entweder über ein Löt- oder Punktschweißverfahren oder durch Drahtbonden auf den Biegeelement angebracht.

Die obere Grenzfrequenz und damit die Scanfrequenz liegt bei dem Ausführungsbeispiel mit den genannten Abmessungen, bei konvektiver Kühlung sowie bei periodischer Schwingungsbewegung bei ca. 50 Hz, der erzielbare Scanwinkel bei ca. 50°,

Im Rahmen einer dritten alternativen Ausführungsform bietet es sich an, den Magneten in den Träger zu integrieren.

### Literatur:

[1] Runge, W.: Zebrastreifen im Laserfokus, Optikentwicklung für einen Barcode-Scanner; F&M Optik, Jahrgang 108 (2000) 12, S44-46
[2] DE 196 06 831 A1
[3] Garnier, A. et al.: A fast, robust ans dimple 2-D micro-optical scanner based on contactless magnetostrictive actuation; Proc. MEMS 00, Miyazaki, Japan (2000)
[4] Conant, R. A. et al.: A raster-scanning full-motion video display using polysilicon micromachined mirrors, Proc. Transducers 99, Sendai, Japan (1999), S.376-379
[5] Kunz, Th. et al.: Electromagnetic microactuators for optical applications; Proc. Actuator 2000, Bremen, Germany (2000), S. 355-358
[6] DE 198 21 841
[7] JP-A-08262364 (Abstract)

### Bezugszeichenliste:

- 1: Biegeelement
- 2: mikrooptischer Spiegel
- 3: Magnet
- 4: Träger
- 5: Isolationsschicht
- 6: Anschluss

## Patentansprüche

1. Aktor für einen optisch-mechanischen Scanner mit einem Stellglied für einen optischen Spiegel (2), wobei das Stellglied aus einer Formgedächtnislegierung besteht,
**dadurch gekennzeichnet, dass**
a) die Formgedächtnislegierung eine Curie-Temperatur und eine Umwandlungstemperatur von einer martensitischen zu einer austenitischen Phase oberhalb des Einsatztemperaturbereichs aufweist, wobei oberhalb der Curie-Temperatur und der Umwandlungstemperatur eine zuvor eingeprägte Gedächtnisgestalt bei paramagnetischen Eigenschaften einstellbar ist und die Legierung unterhalb der Curie-Temperatur ferromagnetische Eigenschaften aufweist,
b) das Biegeelement (1) in einem magnetischen Feld angeordnet ist, sowie
c) das Biegeelement (1) so gestaltet ist, dass eine Rückstellkraft in die zuvor eingeprägte Gedächtnisgestalt und eine Kraft durch das magnetische Feld in entgegengesetzter Richtung auf die Formgedächtnislegierung einwirken.

2. Aktor nach Anspruch 1, **dadurch gekennzeichnet, dass** das Stellglied ein Biegeelement (1) oder ein Torsionselement ist.

3. Aktor nach Anspruch 1 oder 2, **dadurch gekennzeichnet, dass**
a) das Biegeelement (1) ein in U-Form ausgeschnittenes Blech aus der NiMnGa-Legierung mit zwei proximalen und einem distalen Ende ist, dessen proximale Enden voneinander elektrisch isoliert auf einen Träger (4) befestigt sind und an dessen frei schwingbaren distalem Ende ein Spiegel (2) zur Strahlumlenkung befestigt ist,
b) an den proximalen Enden jeweils ein elektrischer Anschluss (6) zum elektrischen Aufheizen des Biegeelements durch einem direkten Stromdurchgang vorgesehen ist,
c) das magnetische Feld durch einen Permanentmagneten (3) erzeugt wird.

4. Aktor nach Anspruch 3, **dadurch gekennzeichnet, dass** der Träger (4) ein in U-Form gebogener Blechstreifen oder eine aus mehreren Komponenten zusammengesetzte U-förmige Baugruppe ist und als Träger des Biegeelements (1) und des Magneten (3) dient.

5. Aktor nach Anspruch 4, **dadurch gekennzeichnet, dass**
a) der Träger (4) aus einem weichmagnetischen Material hergestellt ist und mit dem Biegeelement (1) und dem Magneten (3) einen magnetischen Kreis bildet, sowie
b) zwischen Biegeelement (1) und Träger (4) eine elektrische Isolierung (5) vorgesehen ist.

6. Aktor nach einem der Ansprüche 1 bis 5, **dadurch gekennzeichnet, dass** die Curie-Temperatur und die Umwandlungstemperatur in einem Temperaturfenster von 30°C liegen.

7. Aktor nach einem der Ansprüche 1 bis 6, **dadurch gekennzeichnet, dass** die Formgedächtnislegierung aus 50 - 54 At.-% Ni, 23 - 25 At.-% Mn und 21 - 25 At.-% Ga besteht.

8. Verfahren zur Ablenkung eines Lichtstrahls unter Verwendung eines Aktors nach einem der vorangegangenen Ansprüche.

## Claims

1. Actuator for an optico-mechanical scanner with a controller for an optical mirror (2) consisting of a shape-memory alloy, **characterized by**
a) the Curie temperature and the conversion temperature from the martensitic to the austenitic phase of the shape-memory alloy being above the operation temperature, with a memorized shape at paramagnetic properties being set above the Curie temperature and the conversion temperature and the alloy having ferromagnetic properties below the Curie temperature,
b) the bending element (1) being located in a magnetic field, and
c) the bending element (1) being designed, such that a force to reset the memorized shape and a force by the magnetic field act on the shape-memory alloy in opposite direction.

2. Actuator according to Claim 1, **characterized by** the controller being a bending element (1) or a torsion element.

3. Actuator according to Claim 1 or 2, **characterized by**
a) the bending element (1) being a U-shaped sheet metal made of an NiMnGa alloy having two proximal ends and one distal end, with the two proximal ends being insulated from each other and fixed on a carrier (4) and a mirror (2) for beam deflection being attached to the freely vibrating distal end,
b) an electric connection (6) being provided at each proximal end for the electric heating of the bending element by direct current flow, and by
c) the magnetic field being generated by a permanent magnet (3).

4. Actuator according to Claim 3, **characterized by** the carrier (4) being a U-shaped strip of sheet metal or a U-shaped assembly consisting of several components that carries the bending element (1) and the magnet (3).

5. Actuator according to Claim 4, **characterized by**
a) the carrier (4) being made of a soft magnetic material and forming a magnetic circle together with the bending element (1) and the magnet (3) and
b) an electric insulation (5) being arranged between the bending element (1) and the carrier (4).

6. Actuator according to one of Claims 1 through 5, **characterized by** the Curie temperature and the conversion temperature lying in a temperature window of 30°C.

7. Actuator according to one of Claims 1 through 6, **characterized by** the shape-memory alloy consisting of 50 - 54 at.% Ni, 23 - 25 at.% Mn, and 21 - 25 at.% Ga.

8. Process for the deflection of a light beam using an actuator according to one of the Claims above.

## Revendications

1. Actionneur pour un scanner optomécanique comprenant un élément de réglage pour un miroir optique (2), l'élément de réglage étant constitué d'un alliage à mémoire de forme,
**caractérisé en ce que**
a) l'alliage à mémoire de forme présente une température de Curie et une température de transformation entre une phase martensitique et une phase austénitique au-dessus de la température d'utilisation, une forme de mémoire préalablement retenue étant réglable, pour des propriétés paramagnétiques, au-dessus de la température de Curie et de la température de transformation et l'alliage présentant des propriétés ferromagnétiques en dessous de la température de Curie,
b) l'élément de flexion (1) est disposé dans un champ magnétique, et
c) l'élément de flexion (1) est conçu de telle sorte qu'une force de rappel dans la forme de mémoire préalablement retenue et une force à travers le champ magnétique agissent dans des directions opposées sur l'alliage à mémoire de forme.

2. Actionneur selon la revendication 1,
**caractérisé en ce que**
l'élément de réglage est un élément de flexion (1) ou un élément de torsion.

3. Actionneur selon la revendication 1 ou 2,
**caractérisé en ce que**
a) l'élément de flexion (1) est une tôle découpée en forme de U en alliage NiMnGa avec deux extrémités proximales et une extrémité distale, dont les extrémités proximales sont fixées sur un support (4) en étant isolées électriquement l'une de l'autre et dont l'extrémité distale librement oscillante comporte un miroir (2) fixé à celle-ci pour dévier les rayons,
b) au niveau des extrémités proximales, on prévoit respectivement un raccord électrique (6) pour chauffer électriquement l'élément de flexion par un passage de courant direct,
c) le champ magnétique est généré par un aimant permanent (3).

4. Actionneur selon la revendication 3,
**caractérisé en ce que**
le support (4) est une bande de tôle pliée en forme de U ou un module en forme de U constitué de plusieurs composants et sert de support de l'élément de flexion (1) et de l'aimant (3).

5. Actionneur selon la revendication 4,
**caractérisé en ce que**
a) le support (4) est fabriqué en un matériau magnétique mou et forme avec l'élément de flexion (1) et l'aimant (3) un circuit magnétique, et
b) entre l'élément de flexion (1) et le support (4), on prévoit une isolation électrique (5).

6. Actionneur selon l'une des revendications 1 à 5,
**caractérisé en ce que**
la température de Curie et la température de transformation se trouvent dans une plage de température de 30°C.

7. Actionneur selon l'une des revendications 1 à 6,
**caractérisé en ce que**
l'alliage à mémoire de forme se compose de 50 % - 54 % atomique de Ni, de 23 % - 25 % atomique de Mn et de 21 % - 25 % atomique de Ga.

8. Procédé de déviation d'un rayon lumineux à l'aide d'un actionneur selon l'une des revendications précédentes.
